# EUROPEAN PATENT APPLICATION

(11) **EP 3 101 555 A1**
(43) Date of publication of application: **07.12.2016**
(21) Application number: 15821279.5
(22) Date of filing: 06.07.2015
(51) Int. Cl.: G06F 17/30

(54) **DATA PROCESSING METHOD AND DEVICE**

(30) Priority: 17.07.2014 CN 201410339981
(71) Applicant: Huawei Technologies Co. Ltd., Shenzhen, Guangdong 518129 (CN)
(72) Inventor: ZHAO, Jingjing, Shenzhen Guangdong 518129 (CN)
(74) Representative: Thun, Clemens
(86) International application number: PCT/CN2015/083378
(87) International publication number: WO 2016/008368

(57) **Abstract**

A data processing method and apparatus are provided, where the method includes: determining target-type products of a user according to a search keyword entered by the user (S110); obtaining a preference of the user for at least two attributes of the target-type products, where the preference is used to indicate a preference degree of the user for the attributes (S120); determining a comprehensive preference quantization value of the target-type products according to the preference, where the comprehensive preference quantization value is used to represent a preference degree of the user for the target-type products (S130); and presenting at least one product in the target-type products to the user according to the comprehensive preference quantization value (S140). According to the data processing method and apparatus, a search result is presented to a user according to a preference of the user for each attribute of at least two attributes of a target product that is searched for, which can improve efficiency of obtaining a desired product by the user by searching.

## Description

### CROSS-REFERENCE TO RELATED APPLICATIONS

This application claims priority to Chinese Patent Application No. 201410339981.2, filed with the Chinese Patent Office on July 17, 2014, and entitled "DATA PROCESSING METHOD AND APPARATUS", which is incorporated herein by reference in its entirety.

### TECHNICAL FIELD

Embodiments of the present invention relate to the communications field, and more specifically, to a data processing method and apparatus.

### BACKGROUND

At present, in a main search mode for an online store on the market, each search keyword is displayed, for example, by listing different brands, prices, categories, and physical attribute descriptions, to enable a user to search for a product. A disadvantage of the current search mode is that: a user generally cannot define content that the user is interested in, and there is no memory function for a search option. Therefore, the user still needs to perform setting and selection again next time the user performs a search, it is difficult for the user to find, in massive information, a product that the user wants to buy, and purchase efficiency is low.

### SUMMARY

Embodiments of the present invention provide a data processing method and apparatus, which can improve efficiency of obtaining a desired product by a user by searching.

A first aspect provides a data processing method, where the method includes:
determining target-type products of a user according to a search keyword entered by the user;
obtaining a preference of the user for at least two attributes of the target-type products, where the preference is used to indicate a preference degree of the user for the attributes;
determining a comprehensive preference quantization value of the target-type products according to the preference, where the comprehensive preference quantization value is used to represent a preference degree of the user for the target-type products; and
presenting at least one product in the target-type products to the user according to the comprehensive preference quantization value.

With reference to the first aspect, in a first possible implementation manner of the first aspect, the obtaining a preference of the user for at least two attributes of the target-type products includes:
obtaining the preference according to at least one of the following information: purchase information of the user for the target-type products, browsing information of the user for the target-type products, or evaluation information of the user for the target-type products.

With reference to the first aspect, in a second possible implementation manner of the first aspect, the obtaining a preference of the user for at least two attributes of the target-type products includes:
receiving first information that is entered by the user and used to indicate the at least two attributes of the target-type products;
obtaining the at least two attributes of the target-type products according to the first information;
receiving second information that is entered by the user and used to indicate the preference for the at least two attributes; and
obtaining the preference for the at least two attributes according to the second information.

With reference to the second possible implementation manner of the first aspect, in a third possible implementation manner of the first aspect, the receiving first information that is entered by the user and used to indicate the at least two attributes of the target-type products includes:
presenting, in a first area of a user interface UI presented to the user, an optional attribute list of the target-type products; and
receiving the first information that is selected by the user according to the optional attribute list; and
the receiving second information that is entered by the user and used to indicate the preference for the at least two attributes includes:
   presenting, in a second area of the UI presented to the user, an input box or a value slider bar that is used for the user to set the preference; and
   receiving the second information that is set by the user in the input box or on the value slider bar.

With reference to the first aspect or any possible implementation manner of the first to third possible implementation manners of the first aspect, in a fourth possible implementation manner of the first aspect, the determining a comprehensive preference quantization value of the target-type products according to the preference includes:
determining the comprehensive preference quantization value of the target-type products according to the preference and a product recommendation rating of a seller.

With reference to the fourth possible implementation manner of the first aspect, in a fifth possible implementation manner of the first aspect, the determining the comprehensive preference quantization value of the target-type products includes:
receiving third information entered by the user, where the third information is used to indicate respective weights of the preference and the product recommendation rating in the comprehensive preference quantization value; and
determining the comprehensive preference value of the target-type products according to the third information, the preference, and the product recommendation rating.

With reference to the first aspect or any possible implementation manner of the first to fifth possible implementation manners of the first aspect, in a sixth possible implementation manner of the first aspect, the presenting at least one product in the target-type products to the user according to the comprehensive preference quantization value includes:
presenting the target-type products in descending order of the comprehensive preference quantization value.

With reference to the first aspect or any possible implementation manner of the first to fifth possible implementation manners of the first aspect, in a seventh possible implementation manner of the first aspect, the method further includes:
receiving a constraint value that is of the comprehensive preference quantization value and that is entered by the user; and
the presenting at least one product in the target-type products to the user according to the comprehensive preference quantization value includes:
   presenting the at least one product in the target-type products to the user according to the constraint value and the comprehensive preference quantization value, where a comprehensive preference quantization value of the at least one product satisfies the constraint value.

A second aspect provides a data processing apparatus, where the apparatus includes:
a first determining module, configured to determine target-type products of a user according to a search keyword entered by the user;
an obtaining module, configured to obtain a preference of the user for at least two attributes of the target-type products determined by the first determining module, where the preference is used to indicate a preference degree of the user for the attributes;
a second determining module, configured to determine a comprehensive preference quantization value of the target-type products according to the preference obtained by the obtaining module, where the comprehensive preference quantization value is used to represent a preference degree of the user for the target-type products; and
a presentation module, configured to present at least one product in the target-type products to the user according to the comprehensive preference quantization value determined by the second determining module.

With reference to the second aspect, in a first possible implementation manner of the second aspect, the obtaining module is specifically configured to obtain the preference according to at least one of the following information: purchase information of the user for the target-type products, browsing information of the user for the target-type products, or evaluation information of the user for the target-type products.

With reference to the second aspect, in a second possible implementation manner of the second aspect, the obtaining module includes:
a first receiving unit, configured to receive first information that is entered by the user and used to indicate the at least two attributes of the target-type products;
an obtaining unit, configured to obtain the at least two attributes of the target-type products according to the first information; and
a second receiving unit, configured to receive second information that is entered by the user and used to indicate the preference for the at least two attributes; where
the obtaining unit is further configured to obtain the preference for the at least two attributes according to the second information.

With reference to the second possible implementation manner of the second aspect, in a third possible implementation manner of the second aspect, the obtaining module further includes:
a first presenting unit, configured to present, in a first area of a user interface UI presented to the user, an optional attribute list of the target-type products; and
a second presenting unit, configured to present, in a second area of the UI presented to the user, an input box or a value slider bar that is used for the user to set the preference; where
the first receiving unit is specifically configured to receive the first information that is selected by the user according to the optional attribute list presented by the first presenting unit; and
the second receiving unit is specifically configured to receive the second information that is set by the user in the input box or on the value slider bar, where the input box or the value slider bar is presented by the second presenting unit.

With reference to the second aspect or any possible implementation manner of the first to third possible implementation manners of the second aspect, in a fourth possible implementation manner of the second aspect, the second determining module is specifically configured to determine the comprehensive preference quantization value of the target-type products according to the preference and a product recommendation rating of a seller.

With reference to the fourth possible implementation manner of the second aspect, in a fifth possible implementation manner of the second aspect, the second determining module includes:
a third receiving unit, configured to receive third information entered by the user, where the third information is used to indicate respective weights of the preference and the product recommendation rating in the comprehensive preference quantization value; and
a determining unit, configured to determine the comprehensive preference value of the target-type products according to the third information received by the third receiving unit, the preference, and the product recommendation rating.

With reference to the second aspect or any possible implementation manner of the first to fifth possible implementation manners of the second aspect, in a sixth possible implementation manner of the second aspect, the presentation module is specifically configured to present the target-type products in descending order of the comprehensive preference quantization value.

With reference to the second aspect or any possible implementation manner of the first to fifth possible implementation manners of the second aspect, in a seventh possible implementation manner of the second aspect, the apparatus further includes:
a receiving module, configured to receive a constraint value that is of the comprehensive preference quantization value and that is entered by the user; where
the presentation module is specifically configured to present the at least one product in the target-type products to the user according to the constraint value received by the receiving module and the comprehensive preference quantization value, where a comprehensive preference quantization value of the at least one product satisfies the constraint value.

Based on the foregoing technical solutions, according to the data processing method and apparatus in the embodiments of the present invention, a comprehensive preference quantization value of target-type products that are corresponding to a search keyword of a user is determined according to a preference for at least two attributes of the target-type products, and the target-type products are presented to the user according to the comprehensive preference quantization value, which can improve efficiency of obtaining a desired product by the user by searching, and further improve user experience satisfaction.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a data processing method according to an embodiment of the present invention;
FIG. 2 is another schematic flowchart of a data processing method according to an embodiment of the present invention;
FIG. 3 is a schematic diagram of a data processing method according to an embodiment of the present invention;
FIG. 4 is a schematic block diagram of a data processing apparatus according to an embodiment of the present invention; and
FIG. 5 is a schematic block diagram of a data processing apparatus according to another embodiment of the present invention.

### DESCRIPTION OF EMBODIMENTS

The following clearly describes technical solutions in embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

It should be understood that in the embodiments of the present invention, user equipment (User Equipment, UE) includes but is not limited to a mobile station (Mobile Station, MS), a mobile terminal (Mobile Terminal), a mobile telephone (Mobile Telephone), a handset (handset), portable equipment (portable equipment), and the like. The user equipment may communicate with one or more core networks by using a radio access network (Radio Access Network, RAN). For example, the user equipment may be a mobile telephone (or referred to as a "cellular" telephone), or a computer with a wireless communication function, or the user equipment may be a portable, pocket-sized, handheld, computer built-in, or in-vehicle mobile apparatus.

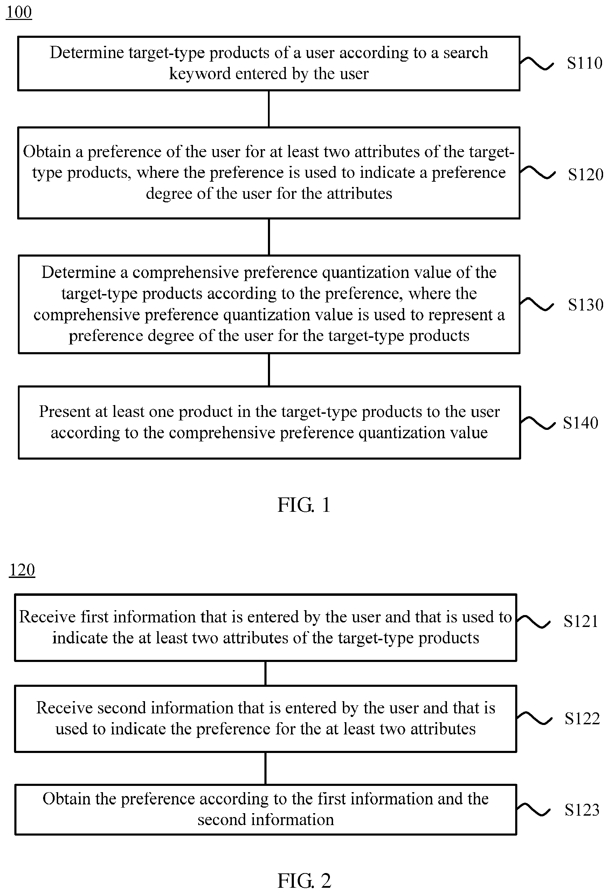

FIG. 1 shows a data processing method 100 according to an embodiment of the present invention. As shown in FIG. 1, the method 100 includes:
S110: Determine target-type products of a user according to a search keyword entered by the user.
S120: Obtain a preference of the user for at least two attributes of the target-type products, where the preference is used to indicate a preference degree of the user for the attributes.
S130: Determine a comprehensive preference quantization value of the target-type products according to the preference, where the comprehensive preference quantization value is used to represent a preference degree of the user for the target-type products.
S140: Present at least one product in the target-type products to the user according to the comprehensive preference quantization value.

Therefore, according to the data processing method in this embodiment of the present invention, a comprehensive preference quantization value of target-type products that are corresponding to a search keyword of a user is determined according to a preference for each attribute of at least two attributes of the target-type products, and the target-type products are presented to the user according to the comprehensive preference quantization value, which can improve efficiency of obtaining a desired product by the user by searching, and further improve user experience satisfaction.

It should be understood that the preference in this embodiment of the present invention is a preference degree of the user for each attribute of the at least two attributes of the target-type products. For example, the target-type products are pelisses, the at least two attributes are a color and a size, and the preference is as follows: a color preference is 80% for a green color, and a size preference is 60% for a long pattern. The comprehensive preference quantization value of the target-type products refers to a comprehensive quantization value that is of the target-type products and that is determined according to the foregoing preference. Still using the preference in the foregoing example as an example, a comprehensive preference quantization value of a yellow long-pattern pelisse may be: (1 - 0.8)/5 + 0.6/5 = 0.4. In other words, the comprehensive preference quantization value is a quantization value determined with a consideration of a preference of the user for each attribute of the at least two attributes of the target-type products, and can represent a general preference degree of the user for a product. A search result is presented to the user according to the comprehensive preference quantization value, so that the search result presented to the user is closer to an interest and a need of the user, thereby effectively improving efficiency of obtaining a target product from massive products by the user.

It should be understood that the data processing method 100 in this embodiment of the present invention may be executed, for example, by user equipment.

In S110, the target-type products of the user are determined according to the search keyword entered by the user. Specifically, the search keyword entered by the user is received, and the target-type products that the user wants to search for are determined according to the search keyword. For example, when the search keyword is pelisse, all clothes that are related to or similar to a pelisse and that can be obtained, by searching, in a network or a system are used as the target-type products.

Optionally, in an embodiment, receiving the search keyword entered by the user includes: presenting, in a third area of a user interface (User Interface, UI) presented to the user, an input box used for the user to enter the search keyword; and receiving the search keyword that is entered by the user in the input box in the third area.

It should be understood that the third area used for the user to enter the search keyword may be located in any location on the UI of the user equipment, which is not limited in this embodiment of the present invention. Specifically, for example, when partial zoom-in or zoom-out occurs on the UI or the user pages up or down, a location, on the UI, of the third area used for entering the search keyword may change correspondingly.

In S120, the obtaining a preference of the user for at least two attributes of the target-type products may be understood as: obtaining a preference for each attribute of the at least two attributes of the target-type products, where the preference is used to indicate a preference degree of the user for each attribute of the at least two attributes. For example, the target-type products are pelisses, the at least two attributes are a color and a size, and the preference is 80% for a green color and 60% for a long pattern. It indicates that when the user searches for a pelisse, a preference for the green color is 80%, and in other words, a preference for other colors is 20%; and a preference for the long pattern is 60%, that is, a preference for a short pattern is 40%.

It should be understood that, in this embodiment of the present invention, the preference may also be predicted according to historical product purchase information, browsing information, and evaluation information of the user; or the preference may be predicated according to input information of the user.

Optionally, in an embodiment, as shown in FIG. 2, the obtaining a preference of the user for at least two attributes of the target-type products in S120 includes:
S121: Receive first information that is entered by the user and used to indicate the at least two attributes of the target-type products.
S122: Receive second information that is entered by the user and used to indicate the preference for the at least two attributes.
S123: Obtain the preference according to the first information and the second information.

Specifically, for example, the search keyword entered by the user is pelisse, the first information indicates that at least two attributes of a pelisse are three attributes, that is, a color, a size, and a collar pattern, and the second information indicates a preference degree of the user for each of the three attributes, where the preference degree is specifically as follows: a color preference is 80% for a green color, a size preference is 60% for a long pattern, and a collar pattern preference is 90% for a high collar.

It should be understood that the first information may directly be names of the at least two attributes, or may be indication information used for indicating the at least two attributes. For example, in the foregoing example, the first information may directly be the color, the size, or the collar pattern. When a system predefines that a letter is used to indicate an attribute type, and "A" is used to indicate the color, "B" is used to indicate the size, and "C" is used to indicate the collar pattern, the first information may be A, B, and C.

In S123, the preference degree of the user for each attribute of the at least two attributes of the target-type products may be determined according to the first information and the second information that are entered by the user.

It should be understood that, in this embodiment of the present invention, the at least two attributes may be any two or more attributes that the user is interested in, may not be limited by an attribute option predefined in a system, or may be defined by the user. The preference for each attribute of the at least two attributes may also be defined by the user according to an interest and a preference of the user. In an existing search mode for an online store, a user can determine a search condition only according to system predefined information. In comparison, the technical solution in this embodiment of the present invention can be closer to an actual need of a user, so that the user can quickly find a desired product in massive information, thereby improving user experience satisfaction.

In addition, according to the data processing method in this embodiment of the present invention, in a process of presenting a search result to a user according to a search keyword of the user each time, a preference for at least two attributes of target-type products that are corresponding to the search keyword of the user is obtained, so as to determine a comprehensive preference quantization value of the target-type products, and present the search result to the user according to the comprehensive preference quantization value. In this process, for example, provided that the user searches for a pelisse for a second time, when presenting a result to the user, a system automatically presents the result to the user according to a preference that is for at least two attributes of a pelisse and that is defined by the user in advance (for example, a preference defined when the user searches for a pelisse for the first time), and the user does not need to define a preference for various attributes of a pelisse again. Compared with the existing search mode, the solution provided in this embodiment of the present invention can avoid that a user repeatedly sets a search option, and can improve efficiency of searching for a product by the user.

It should be further understood that an optional reference list and a value slider bar may be further presented to the user, to help the user set the preference for each attribute of the at least two attributes.

Optionally, in an embodiment, the receiving first information that is entered by the user and used to indicate the at least two attributes of the target-type products in S121 includes:
presenting, in a first area of the user interface UI presented to the user, an optional attribute list of the target-type products; and
receiving the first information that is selected by the user according to the optional attribute list.

The receiving second information that is entered by the user and used to indicate the preference for the at least two attributes in S122 includes:
presenting, in a second area of the UI presented to the user, an input box or a value slider bar that is used for the user to set the preference; and
receiving the second information that is set by the user in the input box or on the value slider bar.

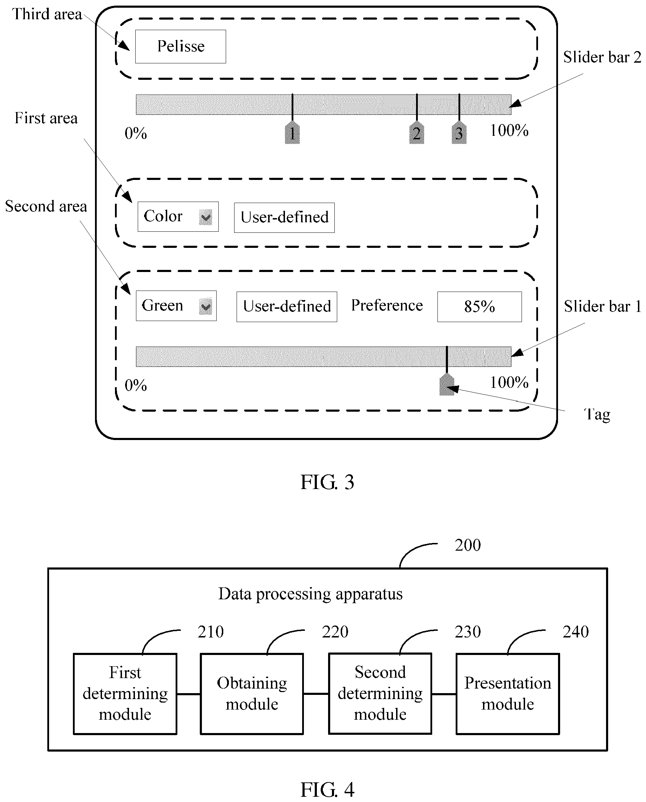

Specifically, FIG. 3 schematically shows the UI interface presented to the user. As shown in FIG. 3, for example, a search keyword entered by the user in the second area is pelisse, an optional drop-down menu used for determining the at least two attributes is presented to the user in the first area, and the optional drop-down menu may include attributes such as a color, a price, a material, and a size, so that the user can determine the at least two attributes. Optionally, as shown in FIG. 3, a user-defined attribute input box may be presented to the user, so that the user enters a personalized attribute type according to an interest and a hobby of the user; and an input box used for defining the preference for each attribute of the at least two attributes may be presented to the user in the second area. Specifically, for example, when an attribute selected by the user is a color, an optional drop-down list for a color and a corresponding preference input box may be presented to the user. Specifically, as shown in FIG. 3, an attribute determined by the user and received in the first area is a color, and a color preference of the user that is received in the second area is 85% for a green color. For another example, the user selects the green color and sets a preference for the green color to 85%.

A slider bar used for displaying a specific value of the preference may be further presented to the user. Specifically, for a slider bar 1 shown in FIG. 3, for example, when the user slides a tag in a different location on the slider bar 1, a corresponding value is displayed in a preference input box, or a corresponding value may be directly displayed in the location, on the slider bar, of the tag. For example, in an example shown in FIG. 3, 85% is displayed.

A "delete" button used for deleting input information may be further presented to the user.

It should be understood that the first area, the second area, and the third area may be located in any locations on the user interface UI, and are not limited to a specific location relationship shown in FIG. 3. It should be further understood that the presented optional attribute list may be a drop-down list, or all options may be listed, or the optional attribute list may be presented by using any existing method for presenting optional information, which is not limited in this embodiment of the present invention.

As shown in FIG. 3, optionally, for a better visual sense, a slider bar 2 used for displaying preferences for different attributes in the at least two attributes may be further presented to the user. The different preferences for the different attributes may be displayed in different locations on the slider bar 2. Specifically, for example, provided that a color preference set by the user is 80% for a green color, a size preference is 60% for a long pattern, and a collar pattern preference is 90% for a high collar, three tags may be displayed on the slider bar 2 in FIG. 3. For example, in FIG. 3, a tag 1 indicates "a high collar, 90%", a tag 2 indicates "a green color, 80%", and a tag 3 indicates "a long pattern, 60%". The slider bar 2 is presented to the user, so that the user can view and set the preferences.

Optionally, attributes that have been set are presented to the user on the UI interface. Specifically, for example, 26 English letters are used to mark the attributes that have been set. For example, preferences for three attributes have been set, that is, the first three letters are highlighted, or colors of the first three letters change. It should be understood that another manner may be further used to mark the attributes that have been set, which is not limited in this embodiment of the present invention.

Optionally, a setting of the preference for each attribute of the foregoing at least two attributes is stored according to a user instruction. Specifically, when it is received that the user clicks an "add" button, related preference settings of the user for a pelisse are stored.

A profile (Profile) of the user may be further created according to settings of the user for product preferences.

It should be understood that FIG. 3 merely schematically shows a specific scenario, that is, an example when the attribute selected by the user is the color, and the preference for the green color is 85%. In an actual application, the user may randomly set the at least two attributes of the target-type products and the preference for each attribute of the at least two attributes, and a location of each input box or display module may also be set randomly, which is not limited in this embodiment of the present invention.

It should be further understood that the slider bar 1 and the slider bar 2 shown in FIG. 3 display a value range from 0% to 100%, and in an actual application, there may further be a value range of another type, for example, 1 to 100 in a hundred-mark system, or 1 to 5 in a five-grade marking system, which is not limited in this embodiment of the present invention.

It should be further understood that the UI interface shown in FIG. 3 is presented to the user, and the preference for each attribute of the at least two attributes of the target-type products that are corresponding to the search keyword of the user may be obtained according to the input information of the user. Therefore, the comprehensive preference quantization value of the target-type products can be determined subsequently, and moreover, the user can manage and maintain personal information of the user, thereby improving user experience satisfaction.

It should be further understood that the example shown in FIG. 3 is to help a person skilled in the art better understand this embodiment of the present invention, but is not to limit the scope of this embodiment of the present invention. Other labels that can be conveniently identified and viewed by the user may be further presented on the UI interface shown in FIG. 3, or other buttons or menus that can be conveniently operated by the user may be set. Apparently, a person skilled in the art may perform various equivalent modifications or variations according to the example shown in FIG. 3, and such modifications or variations also fall within the scope of this embodiment of the present invention.

Alternatively, in S120, the preference of the user for each attribute of the at least two attributes of the target-type products that are corresponding to the search keyword may be obtained by collecting statistics on other information such as the historical product purchase information of the user.

Optionally, in an embodiment, the obtaining a preference of the user for at least two attributes of the target-type products in S120 includes:
obtaining the preference according to at least one of the following information: purchase information of the user for the target-type products, browsing information of the user for the target-type products, or evaluation information of the user for the target-type products.

For example, provided that the search keyword of the user is pelisse and a system detects that the user bought a green, long-pattern, high-collar pelisse before, the system can predict preferences of the user for three attributes of a pelisse according to a historical purchase record of the user. For example, a color preference is 80% for a green color, a size preference is 80% for a long pattern, and a collar pattern preference is 80% for a high collar.

In S130, the determining a comprehensive preference quantization value of the target-type products according to the preference for each attribute of the at least two attributes may be understood as: determining a general preference degree of the user for the target-type products according to the preference for each attribute of the at least two attributes, or may also be referred to as rating the target-type products. Specifically, for example, the target-type products that the user searches for are pelisses, and the preference for each attribute of the at least two attributes is as follows: a preference for a green color is 80%, a preference for a long pattern is 60%, and a preference for a high collar is 90%. For example, various pelisses sold by each seller in an online store are classified into the following eight types:
pelisse a: black, long-pattern, and high-collar;
pelisse b: green, long-pattern, and low-collar;
pelisse c: yellow, short-pattern, and high-collar;
pelisse d: green, short-pattern, and low-collar;
pelisse e: red, short-pattern, and low-collar;
pelisse f: red, long-pattern, and low-collar;
pelisse g: green, short-pattern, and high-collar; and
pelisse h: green, long-pattern, and high-collar.

For example, comprehensive preference quantization values of the foregoing eight types of pelisses may be calculated by using the following calculation method:
pelisse a: black, long-pattern, and high-collar, where a comprehensive preference quantization value is: 0.2/3 + 0.6/3 + 0.9/3 = 0.567;
pelisse b: green, long-pattern, and low-collar, where a comprehensive preference quantization value is: 0.8/3 + 0.6/3 + +0.1/3 = 0.500;
pelisse c: yellow, short-pattern, and high-collar, where a comprehensive preference quantization value is: 0.2/3 + 0.4/3 + 0.9/3 = 0.500;
pelisse d: green, short-pattern, and low-collar, where a comprehensive preference quantization value is: 0.8/3 + 0.4/3 + 0.1/3 = 0.433;
pelisse e: red, short-pattern, and low-collar, where a comprehensive preference quantization value is: 0.2/3 + 0.4/3 + 0.1/3 = 0.233;
pelisse f: red, long-pattern, and low-collar, where a comprehensive preference quantization value is: 0.2/3 +0.6/3 + 0.1/3 = 0.300;
pelisse g: green, short-pattern, and high-collar, where a comprehensive preference quantization value is: 0.8/3 + 0.4/3 + 0.9/3 = 0.667; and
pelisse h: green, long-pattern, and high-collar, where a comprehensive preference quantization value is: 0.8/3 + 0.6/3 + 0.9/3 = 0.767.

It should be further understood that the foregoing example merely shows a method for determining a comprehensive preference quantization value of a product, and another existing rating mechanism may be further used to rate a product according to a preference of a user, which is not limited in this embodiment of the present invention. For example, in the foregoing example, different weights may be assigned for a color, a size, and a collar pattern. For example, a comprehensive preference quantization value of the pelisse a is determined according to the following calculation method: 0.2*Q1 + 0.6*Q2 + 0.9*Q3, where Q1, Q2, and Q3 are three weights, and Q1 + Q2 + Q3 = 1. Optionally, the weights may be set by the user.

It should be further understood that, in addition to a consideration of a preference of a user, reference may be further made to a product recommendation rating of a seller for determining a comprehensive preference quantization value of target-type products.

Optionally, in an embodiment, the determining a comprehensive preference quantization value of the target-type products according to the preference in S130 includes:
determining the comprehensive preference quantization value of the target-type products according to the preference and a product recommendation rating of a seller.

Specifically, still using the example in which the keyword entered by the user is pelisse, for example, for the pelisse g, the comprehensive preference quantization value determined according to the preferences of the user for the three attributes is 0.667, and a comprehensive preference quantization value of the pelisse g is determined as 0.8 according to the product recommendation rating of the seller. In this case, a corresponding weight may be separately assigned for the seller and the user. For example, a weight for the seller is 40%, and a weight for the user is 60%; then a final quantization value of the pelisse g is: 0.8*0.4 + 0.667*0.6 = 0.62 = 0.7202. Likewise, comprehensive preference quantization values of the other six types of pelisses may be determined.

Optionally, in an embodiment, the determining the comprehensive preference quantization value of the target-type products in S130 includes:
S131: Receive third information entered by the user, where the third information is used to indicate respective weights of the preference and the product recommendation rating in the comprehensive preference quantization value.
S132: Determine the comprehensive preference value of the target-type products according to the third information, the preference, and the product recommendation rating.

Specifically, the user may set the respective weights of the seller recommendation rating and the user preference in a process of determining the comprehensive preference quantization value of the target-type products. In this way, the preference of the user is considered, to a great extent, in the search result presented to the user, so that the user can quickly obtain a desired product by searching.

Optionally, in an embodiment, the receiving third information entered by the user in S131 includes:
receiving, in a fourth area of the UI presented to the user, the third information entered by the user.

Specifically, the fourth area may be located in any location on the UI interface presented to the user.

In S140, the at least one product in the target-type products is presented to the user based on the search keyword of the user and according to the comprehensive preference quantization value.

Optionally, in an embodiment, the presenting at least one product in the target-type products to the user according to the comprehensive preference quantization value in S140 includes:
presenting the target-type products in descending order of the comprehensive preference quantization value.

Specifically, still using the example in which the target-type products determined according to the search keyword of the user are pelisses, when the comprehensive preference quantization values of the eight types of pelisses determined according to a preference of the user for each attribute of the at least two attributes of a pelisse are:
pelisse a: 0.567, pelisse b: 0.500, pelisse c: 0.500, pelisse d: 0.433, pelisse e: 0.233, pelisse f: 0.300, pelisse g: 0.667, and pelisse h: 0.767, a search result is presented to the user in the following order:
   ① pelisse h (0.767);
   ② pelisse g (0.667);
   ③ pelisse a (0.567);
   ④ pelisse b (0.500);
   ⑤ pelisse c (0.500);
   ⑥ pelisse d (0.433);
   ⑦ pelisse f (0.300); and
   ⑧ pelisse e (0.233).

In a current search method for an online store, a user can search for a related product only according to a search option provided on a search page. The user cannot define a search option that the user is interested in. Moreover, there is no memory function for the search option, so that a same user needs to perform setting and selection again each time the user performs a search, thereby greatly increasing time that the user spends on obtaining, by searching, a desired product. According to the data processing method provided in this embodiment of the present invention, a comprehensive preference quantization value of target-type products is determined according to a preference of a user. The comprehensive preference quantization value is a quantization value determined with a consideration of a preference of the user for each attribute of at least two attributes of the target-type products, and can represent a general preference degree of the user for a product. A search result is presented to the user according to the comprehensive preference quantization value, so that the search result presented to the user is closer to an interest and a need of the user. In addition, the user may randomly set profile information according to the interest of the user. A search system may dynamically determine the comprehensive preference quantization value of the target-type products according to the profile information personally defined by the user, and present a related search result to the user. That is, in the data processing method of this embodiment of the present invention, the preference of the user is considered, to a great extent, in a process of presenting the search result to the user, so that the search result is closer to a need of the user, thereby improving efficiency of obtaining a desired product by the user by searching, and improving user satisfaction.

The search result may be further presented to the user according to a constraint value that is of the comprehensive preference quantization value and that is entered by the user. For example, provided that the search keyword is pelisse and the constraint value of the comprehensive preference quantization value is 80%, it indicates that the user wants to search for a pelisse and wants to search for a pelisse whose comprehensive preference quantization value is 80% or above 80%.

Optionally, in an embodiment, the method 100 shown in FIG. 1 further includes:

S150: Receive a constraint value that is of the comprehensive preference quantization value and that is entered by the user.

The presenting at least one product in the target-type products to the user according to the comprehensive preference quantization value in S140 includes:
presenting the at least one product in the target-type products to the user according to the constraint value and the comprehensive preference quantization value, where a comprehensive preference quantization value of the at least one product satisfies the constraint value.

Specifically, still using the example in which the target-type products are pelisses, provided that the constraint value of the comprehensive preference quantization value is 60%, when the comprehensive preference quantization values of the eight types of pelisses determined according to a preference of the user for each attribute of the at least two attributes of a pelisse are: pelisse a: 0.567, pelisse b: 0.500, pelisse c: 0.500, pelisse d: 0.433, pelisse e: 0.233, pelisse f: 0.300, pelisse g: 0.667, and pelisse h: 0.767, a search result presented to the user according to the constraint value 60% that is of the comprehensive preference quantization value and that is entered by the user is:
① pelisse h (0.767); and
② pelisse g (0.667).

It can be learnt that, in this embodiment of the present invention, a comprehensive preference quantization value of target-type products is determined according to a preference of a user for each attribute of at least two attributes of the target-type products, and a search result is presented to the user according to the comprehensive preference quantization value and a constraint value that is of the comprehensive preference quantization value and that is entered by the user, so that the search result is closer to a need and a preference of the user, thereby improving efficiency of finding a desired product by the user.

Optionally, in an embodiment, the receiving a constraint value that is of the comprehensive preference quantization value and that is entered by the user in S150 includes:
receiving, in a fifth area of the UI presented to the user, the constraint value that is of the comprehensive preference quantization value and that is entered by the user.

Specifically, the fifth area may be located in any location on the UI interface presented to the user.

It should be understood that, in this embodiment of the present invention, the comprehensive preference quantization value of the target-type products may be in any value form, for example, may be represented by using any method for representing a digital ratio or a value, such as a percentage (0%, 100%, or 1%-100%), a number from 1 to N (1-10 scores, 20-100 scores, or the like), or a ratio (1:5, 7:8, 1:100, or 1/2, 6/100, or the like), which is not limited in this embodiment of the present invention.

It should be further understood that, in S130, the comprehensive preference quantization value of the target-type products is determined according to the preference for each attribute of the at least two attributes, where a comprehensive preference quantization value of each product in the target-type products may be determined, or comprehensive preference quantization values of some products in the target-type products may be determined, which is not limited in this embodiment of the present invention.

It should be understood that, in this embodiment of the present invention, the third area used for the user to enter the search keyword, the first area used for the user to enter the first information that is used to indicate the at least two attributes, the second area used for the user to enter the second information that is used to indicate the preference for the at least two attributes, the fourth area used for the user to enter the third information that is used to indicate weights of the preference and the seller recommendation rating, and the fifth area used for the user to enter the constraint value of the comprehensive preference quantization value may be distributed in any locations on the UI interface of the user equipment, which is not limited in this embodiment of the present invention.

Optionally, in an embodiment, in the fifth area used for the user to enter the constraint value of the comprehensive preference quantization value, a value range slider bar of the constraint value may be presented to the user, where the value range slider bar is similar to the slider bar 1 and the slider bar 2 in FIG. 3.

Optionally, in an embodiment, the method 100 shown in FIG. 1 further includes: receiving, in a sixth area, a search triggering message entered by the user; and presenting the at least one product in the target-type products to the user according to the search triggering message.

The sixth area may be located in any location on the UI interface, and a location of the sixth area on the UI interface may change correspondingly with a change of the UI interface (for example, partial interface zoom-in or zoom-out, page-up, or page-down according to an operation of the user), which is not limited in this embodiment of the present invention, as long as it is convenient for the user to trigger a search event.

Optionally, in an embodiment, in the method 100 shown in FIG. 1, at least two areas of the following areas are simultaneously presented to the user: the first area, the second area, the third area, the fourth area, the fifth area, and the sixth area.

Specifically, for example, the first area, the second area, and the third area are simultaneously presented, so that when entering the search keyword, the user can randomly view and modify a definition of the preference for each attribute of the at least two attributes of the target-type products, for example, modify the preference value to perform a second search to make a search result closer to a need of the user.

For another example, the third area and the fifth area are simultaneously presented, so that when entering the search keyword, the user can set the constraint value of the comprehensive preference value of the target-type products that are corresponding to the search keyword.

It should be further understood that, according to the data processing method in this embodiment of the present invention, a comprehensive preference quantization value of the target-type products that are corresponding to the search keyword entered by the user may be determined according to a preference that is set by the user in real time. For example, when the user is not satisfied with a result of a first-time search, the user may modify, in real time, the at least two attributes of the target-type products and the preference for the at least two attributes, and perform a search again. In this scenario, a comprehensive preference quantization value of the target-type products may be determined again according to a modified preference of the user, and a corresponding search result is presented.

Therefore, according to the data processing method in this embodiment of the present invention, a comprehensive preference quantization value of target-type products that are searched for is determined according to a preference of a user for each attribute of at least two attributes of the target-type products, and the target-type products are presented to the user according to the comprehensive preference quantization value, which can improve efficiency of obtaining a desired product by the user by searching, and further improve user experience satisfaction.

It should be further understood that the data processing method in this embodiment of the present invention may be further applied to all fields in which massive information is searched for target information, for example, a field such as global online electronic stores, various business websites, or personal websites.

It should be understood that, in the embodiments of the present invention, serial numbers of the foregoing processes do not imply an execution sequence, and the execution sequence of the processes should be determined according to functions and internal logic of the processes, and should not impose any limitation on the implementation processes of the embodiments of the present invention.

With reference to FIG. 1 to FIG. 3, the data processing method according to the embodiments of the present invention is described in detail above. With reference to FIG. 4, a data processing apparatus according to an embodiment of the present invention is described in detail in the following.

FIG. 4 is a schematic block diagram of a data processing apparatus 200 according to an embodiment of the present invention. As shown in FIG. 4, the apparatus 200 includes:
a first determining module 210, configured to determine target-type products of a user according to a search keyword entered by the user;
an obtaining module 220, configured to obtain a preference of the user for at least two attributes of the target-type products determined by the first determining module, where the preference is used to indicate a preference degree of the user for the attributes;
a second determining module 230, configured to determine a comprehensive preference quantization value of the target-type products according to the preference obtained by the obtaining module, where the comprehensive preference quantization value is used to represent a preference degree of the user for the target-type products; and
a presentation module 240, configured to present at least one product in the target-type products to the user according to the comprehensive preference quantization value determined by the second determining module.

Therefore, according to the data processing apparatus in this embodiment of the present invention, a comprehensive preference quantization value of target-type products that are searched for is determined according to a preference of a user for each attribute of at least two attributes of the target-type products, and the target-type products are presented to the user according to the comprehensive preference quantization value, which can improve efficiency of obtaining a desired product by the user by searching, and further improve user experience satisfaction.

Optionally, in an embodiment, the obtaining module 220 is specifically configured to obtain the preference according to at least one of the following information: purchase information of the user for the target-type products, browsing information of the user for the target-type products, or evaluation information of the user for the target-type products.

Optionally, in an embodiment, the obtaining module 220 includes:
a first receiving unit, configured to receive first information that is entered by the user and used to indicate the at least two attributes of the target-type products;
a second receiving unit, configured to receive second information that is entered by the user and used to indicate the preference for the at least two attributes; and
an obtaining unit, configured to obtain the preference according to the first information received by the first receiving unit and the second information received by the second receiving unit.

Optionally, in an embodiment, the obtaining module 220 further includes:
a first presenting unit, configured to present, in a first area of a user interface UI presented to the user, an optional attribute list of the target-type products; and
a second presenting unit, configured to present, in a second area of the UI presented to the user, an input box or a value slider bar that is used for the user to set the preference; where
the first receiving unit is specifically configured to receive the first information that is selected by the user according to the optional attribute list presented by the first presenting unit; and
the second receiving unit is specifically configured to receive the second information that is set by the user in the input box or on the value slider bar, where the input box or the value slider bar is presented by the second presenting unit.

Optionally, in an embodiment, the second determining module 230 is specifically configured to determine the comprehensive preference quantization value of the target-type products according to the preference and a product recommendation rating of a seller.

Optionally, in an embodiment, the second determining module 230 includes:
a third receiving unit, configured to receive third information entered by the user, where the third information is used to indicate respective weights of the preference and the product recommendation rating in the comprehensive preference quantization value; and
a determining unit, configured to determine the comprehensive preference value of the target-type products according to the third information received by the third receiving unit, the preference, and the product recommendation rating.

Optionally, in an embodiment, the presentation module 240 is specifically configured to present the target-type products in descending order of the comprehensive preference quantization value.

Optionally, in an embodiment, the apparatus 200 further includes:
a receiving module 250, configured to receive a constraint value that is of the comprehensive preference quantization value and that is entered by the user; where
the presentation module is specifically configured to present the at least one product in the target-type products to the user according to the constraint value received by the receiving module and the comprehensive preference quantization value, where a comprehensive preference quantization value of the at least one product satisfies the constraint value.

Therefore, according to the data processing apparatus in this embodiment of the present invention, a comprehensive preference quantization value of target-type products that are searched for is determined according to a preference of a user for each attribute of at least two attributes of the target-type products, and the target-type products are presented to the user according to the comprehensive preference quantization value, which can improve efficiency of obtaining a desired product by the user by searching, and further improve user experience satisfaction.

It should be understood that the foregoing and other operations and/or functions of the modules in the data processing apparatus 200 according to this embodiment of the present invention are to implement the corresponding processes of the methods in FIG. 1 to FIG. 3. For a purpose of brevity, details are not described herein.

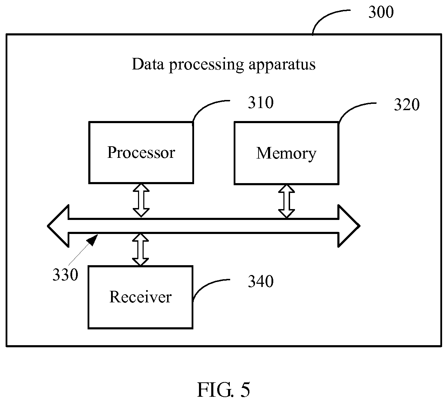

As shown in FIG. 5, an embodiment of the present invention further provides a data processing apparatus 300. The apparatus 300 includes a processor 310, a memory 320, a bus system 330, and a receiver 340. The processor 310 and the memory 320 are connected to each other by using the bus system 330. The memory 320 is configured to store an instruction. The processor 310 is configured to execute the instruction stored by the memory 320, and control, according to the instruction of the memory 330, the receiver 340 to receive a signal or information. When a program stored by the memory 320 is executed, the processor 310 is configured to determine target-type products of a user according to a search keyword entered by the user; obtain a preference of the user for at least two attributes of the target-type products, where the preference is used to indicate a preference degree of the user for the attributes; determine a comprehensive preference quantization value of the target-type products according to the preference, where the comprehensive preference quantization value is used to represent a preference degree of the user for the target-type products; and present at least one product in the target-type products to the user according to the comprehensive preference quantization value.

Therefore, according to the data processing apparatus in this embodiment of the present invention, a comprehensive preference quantization value of target-type products that are searched for is determined according to a preference of a user for each attribute of at least two attributes of the target-type products, and the target-type products are presented to the user according to the comprehensive preference quantization value, which can improve efficiency of obtaining a desired product by the user by searching, and further improve user experience satisfaction.

Optionally, in an embodiment, the processor 310 is specifically configured to obtain the preference according to at least one of the following information: purchase information of the user for the target-type products, browsing information of the user for the target-type products, or evaluation information of the user for the target-type products.

Optionally, in an embodiment, the receiver 340 is configured to: receive first information that is entered by the user and used to indicate the at least two attributes of the target-type products; and receive second information that is entered by the user and used to indicate the preference for the at least two attributes. The processor 310 is specifically configured to obtain the preference according to the first information and the second information.

Optionally, in an embodiment, the processor 310 is specifically configured to: present, in a first area of a user interface UI presented to the user, an optional attribute list of the target-type products; and present, in a second area of the UI presented to the user, an input box or a value slider bar that is used for the user to set the preference. The receiver 340 is specifically configured to: receive the first information that is selected by the user according to the optional attribute list; and receive the second information that is set by the user in the input box or on the value slider bar.

Optionally, in an embodiment, the processor 310 is specifically configured to determine the comprehensive preference quantization value of the target-type products according to the preference and a product recommendation rating of a seller.

Optionally, in an embodiment, the receiver 340 is configured to receive third information entered by the user, where the third information is used to indicate respective weights of the preference and the product recommendation rating in the comprehensive preference quantization value. The processor 310 is specifically configured to determine the comprehensive preference value of the target-type products according to the third information, the preference, and the product recommendation rating.

Optionally, in an embodiment, the processor 310 is specifically configured to present the target-type products in descending order of the comprehensive preference quantization value.

Optionally, in an embodiment, the receiver 340 is further configured to receive a constraint value that is of the comprehensive preference quantization value and that is entered by the user. The processor 310 is specifically configured to present the at least one product in the target-type products to the user according to the constraint value and the comprehensive preference quantization value, where a comprehensive preference quantization value of the at least one product satisfies the constraint value.

Therefore, according to the data processing apparatus in this embodiment of the present invention, a comprehensive preference quantization value of target-type products that are searched for is determined according to a preference of a user for each attribute of at least two attributes of the target-type products, and the target-type products are presented to the user according to the comprehensive preference quantization value, which can improve efficiency of obtaining a desired product by the user by searching, and further improve user experience satisfaction.

It should be understood that, in this embodiment of the present invention, the processor 310 may be a central processing unit (Central Processing Unit, "CPU" for short), or the processor 310 may be another general-purpose processor, digital signal processor (DSP), application-specific integrated circuit (ASIC), field programmable gate array (FPGA), or another programmable logical device, discrete gate or transistor logical device, discrete hardware component, or the like. The general-purpose processor may be a micro processor, or the processor may be any conventional processor or the like.

The memory 320 may include a read-only memory and a random access memory, and provide an instruction and data for the processor 310. A portion of the memory 320 may further include a nonvolatile random access memory. For example, the memory 320 may further store device type information.

In addition to including a data bus, the bus system 330 may further include a power bus, a control bus, a status signal bus, and the like. However, for clarity of description, various buses are marked as the bus system 330 in the figure.

In an implementation process, the steps of the foregoing methods may be completed by using an integrated logical circuit of hardware of the processor 310 or an instruction in a software form. The steps of the methods disclosed in the embodiments of the present invention may be directly executed by a hardware processor, or executed by a combination of hardware and a software module in a processor. The software module may be located in a mature storage medium in the art, such as a random access memory, a flash memory, a read-only memory, a programmable read-only memory or an electrically erasable programmable memory, or a register. The storage medium is located in the memory 320. The processor 310 reads information from the memory 320, and completes the steps of the foregoing methods in combination with the hardware of the processor 310. To avoid repetition, detailed descriptions are not provided herein.

It should be understood that the data processing apparatus 300 according to this embodiment of the present invention may be corresponding to the data processing apparatus 200 in the embodiment of the present invention, and the foregoing and other operations and/or functions of the modules in the data processing apparatus 300 according to this embodiment of the present invention are to implement the corresponding processes of the methods in FIG. 1 to FIG. 3. For a purpose of brevity, details are not described herein.

Therefore, according to the data processing apparatus in this embodiment of the present invention, a comprehensive preference quantization value of target-type products that are searched for is determined according to a preference of a user for each attribute of at least two attributes of the target-type products, and the target-type products are presented to the user according to the comprehensive preference quantization value, which can improve efficiency of obtaining a desired product by the user by searching, and further improve user experience satisfaction.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts shown as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data processing method, comprising:
determining target-type products of a user according to a search keyword entered by the user;
obtaining a preference of the user for at least two attributes of the target-type products, wherein the preference is used to indicate a preference degree of the user for the attributes;
determining a comprehensive preference quantization value of the target-type products according to the preference, wherein the comprehensive preference quantization value is used to represent a preference degree of the user for the target-type products; and
presenting at least one product in the target-type products to the user according to the comprehensive preference quantization value.

2. The method according to claim 1, wherein the obtaining a preference of the user for at least two attributes of the target-type products comprises:
obtaining the preference according to at least one of the following information: purchase information of the user for the target-type products, browsing information of the user for the target-type products, or evaluation information of the user for the target-type products.

3. The method according to claim 1, wherein the obtaining a preference of the user for at least two attributes of the target-type products comprises:
receiving first information that is entered by the user and used to indicate the at least two attributes of the target-type products;
obtaining the at least two attributes of the target-type products according to the first information;
receiving second information that is entered by the user and used to indicate the preference for the at least two attributes; and
obtaining the preference for the at least two attributes according to the second information.

4. The method according to claim 3, wherein
the receiving first information that is entered by the user and used to indicate the at least two attributes of the target-type products comprises:
presenting, in a first area of a user interface UI presented to the user, an optional attribute list of the target-type products; and
receiving the first information that is selected by the user according to the optional attribute list; and
the receiving second information that is entered by the user and used to indicate the preference for the at least two attributes comprises:
presenting, in a second area of the UI presented to the user, an input box or a value slider bar that is used for the user to set the preference; and
receiving the second information that is set by the user in the input box or on the value slider bar.

5. The method according to any one of claims 1 to 4, wherein the determining a comprehensive preference quantization value of the target-type products according to the preference comprises:
determining the comprehensive preference quantization value of the target-type products according to the preference and a product recommendation rating of a seller.

6. The method according to claim 5, wherein the determining the comprehensive preference quantization value of the target-type products comprises:
receiving third information entered by the user, wherein the third information is used to indicate respective weights of the preference and the product recommendation rating in the comprehensive preference quantization value; and
determining the comprehensive preference value of the target-type products according to the third information, the preference, and the product recommendation rating.

7. The method according to any one of claims 1 to 6, wherein the presenting at least one product in the target-type products to the user according to the comprehensive preference quantization value comprises:
presenting the target-type products in descending order of the comprehensive preference quantization value.

8. The method according to any one of claims 1 to 6, wherein the method further comprises:
receiving a constraint value that is of the comprehensive preference quantization value and that is entered by the user; and
the presenting at least one product in the target-type products to the user according to the comprehensive preference quantization value comprises:
presenting the at least one product in the target-type products to the user according to the constraint value and the comprehensive preference quantization value, wherein a comprehensive preference quantization value of the at least one product satisfies the constraint value.

9. A data processing apparatus, comprising:
a first determining module, configured to determine target-type products of a user according to a search keyword entered by the user;
an obtaining module, configured to obtain a preference of the user for at least two attributes of the target-type products determined by the first determining module, wherein the preference is used to indicate a preference degree of the user for the attributes;
a second determining module, configured to determine a comprehensive preference quantization value of the target-type products according to the preference obtained by the obtaining module, wherein the comprehensive preference quantization value is used to represent a preference degree of the user for the target-type products; and
a presentation module, configured to present at least one product in the target-type products to the user according to the comprehensive preference quantization value determined by the second determining module.

10. The apparatus according to claim 9, wherein the obtaining module is specifically configured to obtain the preference according to at least one of the following information:
purchase information of the user for the target-type products, browsing information of the user for the target-type products, or evaluation information of the user for the target-type products.

11. The apparatus according to claim 9, wherein the obtaining module comprises:
a first receiving unit, configured to receive first information that is entered by the user and used to indicate the at least two attributes of the target-type products;
an obtaining unit, configured to obtain the at least two attributes of the target-type products according to the first information; and
a second receiving unit, configured to receive second information that is entered by the user and used to indicate the preference for the at least two attributes; wherein
the obtaining unit is further configured to obtain the preference for the at least two attributes according to the second information.

12. The apparatus according to claim 11, wherein the obtaining module further comprises:
a first presenting unit, configured to present, in a first area of a user interface UI presented to the user, an optional attribute list of the target-type products; and
a second presenting unit, configured to present, in a second area of the UI presented to the user, an input box or a value slider bar that is used for the user to set the preference; wherein
the first receiving unit is specifically configured to receive the first information that is selected by the user according to the optional attribute list presented by the first presenting unit; and
the second receiving unit is specifically configured to receive the second information that is set by the user in the input box or on the value slider bar, wherein the input box or the value slider bar is presented by the second presenting unit.

13. The apparatus according to any one of claims 9 to 12, wherein the second determining module is specifically configured to determine the comprehensive preference quantization value of the target-type products according to the preference and a product recommendation rating of a seller.

14. The apparatus according to claim 13, wherein the second determining module comprises:
a third receiving unit, configured to receive third information entered by the user, wherein the third information is used to indicate respective weights of the preference and the product recommendation rating in the comprehensive preference quantization value; and
a determining unit, configured to determine the comprehensive preference value of the target-type products according to the third information received by the third receiving unit, the preference, and the product recommendation rating.

15. The apparatus according to any one of claims 9 to 14, wherein the presentation module is specifically configured to present the target-type products in descending order of the comprehensive preference quantization value.

16. The apparatus according to any one of claims 9 to 14, wherein the apparatus further comprises:
a receiving module, configured to receive a constraint value that is of the comprehensive preference quantization value and that is entered by the user; wherein
the presentation module is specifically configured to present the at least one product in the target-type products to the user according to the constraint value received by the receiving module and the comprehensive preference quantization value, wherein a comprehensive preference quantization value of the at least one product satisfies the constraint value.
